# EUROPEAN PATENT APPLICATION

(11) **EP 1 447 262 A1**
(43) Date of publication of application: **18.08.2004**
(21) Application number: 03100287.6
(22) Date of filing: 11.02.2003
(51) Int. Cl.: B60K 41/28, B60T 8/00

(54) **Method and device for vehicle motion control**

(71) Applicant: Ford Global Technologies, Inc., A subsidiary of Ford Motor Company, Dearborn, Michigan 48126 (US)
(72) Inventor: Webers, Klaus, 52072 Aachen (DE); Coelingh, Erik, 42470 Olofstorp (SE)
(74) Representative: Drömer, Hans-Carsten, Dr.-Ing.

(57) **Abstract**

The invention relates to a method and a controller for vehicle motion control. In order to coordinate the activities of several active chassis control systems a motion request (M_req) is first expressed by desired values (F_body_x_req, ..., T_body_phi_req) of body forces and/or torques corresponding to the six degrees of freedom of the vehicle. Next, the requested commands (u_1, ..., u_n) for given actuators (A1, ... An) are calculated such that they can produce said desired values of body forces and/or torques. In an intermediate stage the requested tire forces (F_FL_x_req, ..., F_RR_z_req) may be calculated by the vehicle motion controller.

## Description

The invention relates to a method and a device for motion control of a vehicle according to a given motion request.

Modern vehicles are being equipped with a plurality of active or semi-active chassis control systems. Commonly known examples of these are Anti-Lock-Braking systems (ABS), the Electronic Stability Program (EPS/IVD), Variable Damper Systems, Active Suspension Systems, and Active Steering Systems. While there is a clear tendency towards an increasing number and complexity of individual control systems, in particular in the advent of so called 'by-wire-systems', little attempt has been made to systematically integrate these systems into an overall coordinated strategy. In DE 198 38 336 A1 a functional decomposition of overall vehicle control (commonly known as "CARTRONIC") is described which comprises a logical layer of "Vehicle Motion Control". However, no details are provided how to coordinate the activity of different subsystems in that layer.

Therefore, it is an object of the present invention to provide a method and a device for vehicle motion control that optimally coordinate different subsystems and subtasks.

This object is achieved by a method according to claim 1 and a controller according to claim 6. Preferred embodiments of the invention are subject of the dependent claims.

According to a first aspect the invention provides a method for motion control of a vehicle according to a given motion request. The motion request may be any general input or set of data that is necessary and sufficient to define the desired future motion of the vehicle. The motion request may especially comprise information about the driver's demands and about boundary conditions like desired safety constraints. The method comprises the following steps:
a) Expression of said motion request by (preferably six) desired values of body forces and/or torques, the body forces/torques corresponding to the degrees of freedom of the vehicle (i.e. there are as many body forces/torques as degrees of freedom, and each degree of freedom can independently be influenced by the body forces/torques).
b) Calculation of requested activities of actuators which are present in the vehicle, the requested activities being such that they can (at least approximately) produce the desired values of body forces and/or torques determined in step a). The actuators may for example include devices like the internal combustion engine, brakes, dampers etc., and the requested activities of these actuators usually are the forces or torques they can produce. Moreover, there will typically be some redundancy such that the desired values of body forces and/or torques may be produced by many different combinations of actuator activities. This redundancy may be exploited to pursue secondary objectives like optimisation of energy consumption or stability aspects.
c) Sending appropriate commands (like signal voltages, digital values etc.) to the actuators in order to produce said requested activities calculated in step b).

The described method provides a structured approach to vehicle motion control that optimally uses the synergy effects of combined chassis control objectives and systems. This is possible because the kernel of the method is based on the - typically six - elementary degrees of freedom of vehicle motion. Any desired or real motion and any effect of forces may completely be described by these degrees of freedom. Therefore, an optimally coordinated control of vehicle motion can be achieved if it is based on these elementary variables. In contrast to known approaches, neither is the invention limited to a specified set of chassis control systems, nor is it limited to tackling predefined situations or environmental circumstances. The advantages of being that general are that vehicle behavior can be improved in a much broader sense and that more active controls can be taken into account for integration.

According to an optional variant of the method the calculation of requested activities of the actuators in step b) is subdivided into the following two steps:
b1) Calculation of requested tire forces acting on the tires of the vehicle at their contact points to the ground, the requested tire forces being such that they can produce the desired values of body forces and/or torques of step a).
b2) Calculation of requested activities of the actuators that can produce said requested tire forces of step b1) at the contact points of the tires.

The proposed subdivision of step b) is based on the insight that every change in motion of the vehicle is a result of its interaction with the environment, and that this interaction (primarily) takes place via the contact forces between tires and ground. Thus the considered tire forces are suited to represent an intermediate state in which the effects of the actuators and the resulting vehicle movement meet.

The independent degrees of freedom of a conventional vehicle may in principle be expressed by any set of suitable (generalised) coordinates. However, it is preferred to use the customary three Cartesian coordinates x, y, and z to describe the location of the vehicle (or, more precisely, a predetermined point of the vehicle like its centre of gravity) with respect to the environment together with three angles describing the rotation of the vehicle (i.e. its rotation about mutually vertical axes through said predetermined point). These coordinates have the advantage to correspond to the normal description of a vehicle and its motion. The angles of rotation for example correspond to the movements usually called yaw, pitch and roll. Moreover, a force can be assigned to each Cartesian coordinate and a torque can be assigned to each angle coordinate such that the force or torque solely effects the corresponding coordinate.

Preferably the calculation of requested activities of the actuators in step b) or b2) takes internal limits of the actuators into account. Such limits may e.g. concern the maximal duration of activity, maximal forces or the like. Consideration of such limits guarantees that it is really possible to produce the desired movement of the vehicle when the actuators are commanded as calculated.

Moreover it is preferred that the calculation of requested activities of the actuators in step b) or b2) takes the effectiveness of different actuators into account in order to optimise their use. For example such an actuator or set of actuators may be used that produces a desired reaction most rapidly and/or with minimal energy consumption.

The invention relates to a controller for vehicle motion, too. The controller comprises
- an input for a motion request;
- an input for the vehicle state (which may be described by internal parameters like engine speed and external parameters like present location, velocity, acceleration etc.);
- an output for commands to a given set of actuators installed in the vehicle.

The controller is characterised by the following components:
- A number of "body force calculation units" that are designed to express a given motion request by desired values of body forces and/or torques corresponding (in number and effect) to the degrees of freedom of the vehicle.
- A "command calculation unit" that is designed to calculate and issue commands (e.g. as voltages or digital data) via the output to the actuators in order to produce said desired values of body forces and/or torques determined by the "body force calculation units".

The controller is designed and structured such that it can execute the method described above. Preferably the controller and its components are designed such that they can execute the described variants of the method, too. For example may the "command calculation unit" consist of two sub-units, the first sub-unit calculating requested activities of the actuators which can produce the desired values of body forces and/or torques, and the second sub-unit being designed to determine and issue actuator commands in order to produce said requested activities.

The controller achieves the advantages of the described method, i.e. a coordinated control of all aspects of vehicle motion with a minimal complexity of the controller because the structure is based on the fundamental set of (six) independent variables describing vehicle motion.

The actuators that may be used in combination with the proposed controller comprise at least one of a brake, an active steering system and/or (semi-)active suspension elements. It should be noted, however, that this list is not complete. It may be extended by any kind of actuator that may influence vehicle motion. For the integration of a new actuator it is only necessary to adapt the "command calculation unit" accordingly.

Preferred embodiments of the invention will now be described with reference to the accompanying figures, in which
- Fig. 1: illustrates the relation between the input of control signals to the actuators of a vehicle and the resulting vehicle motion;
- Fig. 2: shows the structure of a controller for vehicle motion according to the invention;
- Fig. 3: shows a fixed implementation of a Reversed Force Relation;
- Fig. 4: shows a state-dependent implementation of a Reversed Force Relation.

Most of the known chassis control systems are designed to facilitate individual aspects of vehicle motion like longitudinal deceleration (ABS), lateral movement (active steering systems) or vertical oscillations (controlled dampers, controlled air suspension). However, as all chassis forces have to be counteracted by forces at the tire contact point or patch, there is a strong coupling between all of the chassis forces. Effects due to these couplings are e.g. the yawing motion at braking on surfaces having (left-right) different friction coefficients ("µ-split") or the reduction in lateral tire forces due to braking forces, resulting in deviations of the self-steering behaviour of the vehicle.

In general, a certain amount of overlap of functionality of the various control systems will invariably occur. EP 846 610 B1 for example describes the integration of braking and steering systems for advanced µ-split braking. However, in most cases the interference of active systems is not taken into account in vehicle chassis design. Rather, it is neglected at all or, at best, reduced in order to avoid detrimental effects.

The object of the controller explained in the figures is to make optimal use of all given active control systems. This is achieved by integrating all available sensor and state information and access to all achievable actuator inputs into an overall coordinated control system. The existence of individual control systems, encapsulating direct access to any actuator hardware, does not rule out the approach to fully integrate chassis control action, as far as suitable interfaces for additional command inputs into the single controls are defined, thereby providing the possibility to apply coordinating algorithms at a higher level.

The invention is conceptually part of an overall structure for "Integrated Vehicle Dynamics Control". General architectures for "Integrated Vehicle Dynamics Controls" are described e.g. in E. Coelingh, P. Chaumette, M. Andersson, "Open Interface Definitions for Automotive Systems" (SAE Technical Paper Series 2002-01-0267); T. Bertram, R. Bitzer, R. Mayer, A. Volkart, "CARTRONIC - An Open Architecture for Networking the Control Systems of an Automobile" (SAE Technical Paper Series 980200); WO 00010850 A1; DE 198 38 337 A1; and DE 198 38 336 A1. These architectures aim at re-structuring and dividing existing active chassis control system functionality into various levels, ranging from interpretation of driver's intended behaviour (top-most hierarchical level) to the eventual generation of forces using suitable actuators at the lowest hierarchical stage.

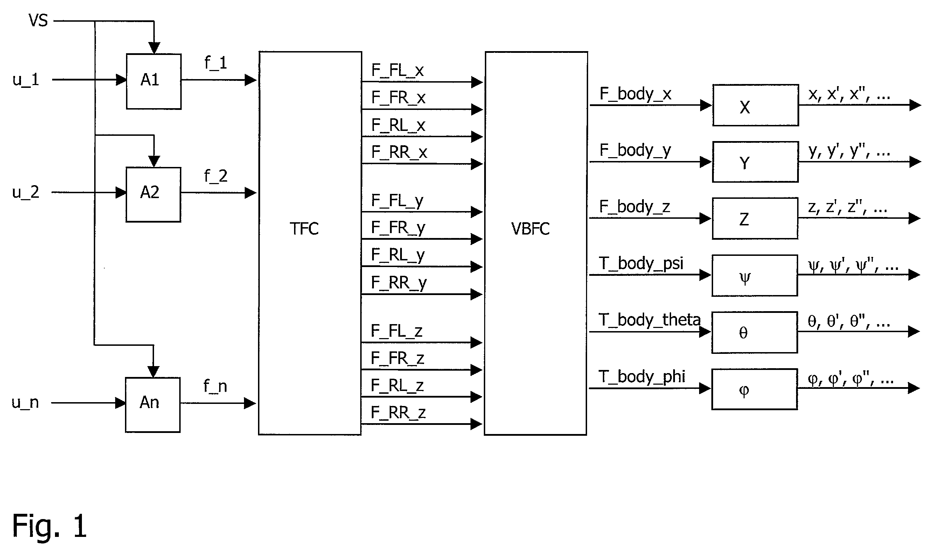

Crucial level within this hierarchically organised architectures is invariably a necessary transformation of vehicle motion requests, represented by abstract signals *M_req,* into specific actuator force requests *f_1,* ... *f_n* with *n* being the number of available actuators. This level is referred to as "Coordinator Vehicle Motion" or "Vehicle Motion Controller" VMC. Within this framework, the invention gives a solution to design the "Vehicle Motion Controller" VMC. This solution for the VMC is based on the following insights (cf. figure 1):
- Vehicle dynamics can only be influenced by application of body forces and/or torques to the vehicle body.
- Vehicle body motions can be decomposed into three translatory plus three rotary degrees of freedom, summing up to six independent degrees of freedom to be controlled.
- Perfect control of vehicle body motions is equivalent to the ability to independently apply arbitrary body forces *F_body_x, F_body_y, F_body_z* and/or body torques *T_body_psi* (yaw), *T_body_theta* (pitch), *T_body_phi* (roll) for all six body degrees of freedom.
- All body exciting forces must be generated in the contact-patch between road and tire. The tire-contact forces at each tire can be decomposed into three translatory degrees of freedom, summing up to twelve tire forces *F_FL_x* (forward left wheel, x-direction) to *F_RR_z* (rear right wheel, z-direction).
- Each chassis control system can be considered as an active or semi-active generator of tire forces *F_FL_x, ... F_RR_z.*
- Vehicle body forces/torques are related to tire forces by fixed relationships.
- Evaluation of these force relations, i.e. calculation of vehicle body forces/torques from known tire forces, may be expressed in direct algebraic formulae.

Figure 1 illustrates these features in a diagram of the mechanical structure of a vehicle. Control signals *u_1,* ... *u_n* like signal/supply voltages or digital commands are provided to the different actuators *A1,* ... *An.* In reaction to these commands and dependent on the state VS of the vehicle, the actuators produce (semi-)active forces *f_1,* ... *f_n* which act at different locations of the vehicle.

Regardless of their individual nature and operating mode, the actuator forces *f_1,* ... *f_n* will finally result in twelve tire forces *F_FL_x_to F_RR_z.* The relation between actuator forces and tire forces is content of the so called "Tire Force Coupling" module TFC.

Next, the tire forces *F_FL_x* to *F_RR_z* are transformed by the "Vehicle Body Force Coupling" module VBFC to the body forces *F_body_x, F_body_y, F_body_z* and the body torques *T_body_psi, T_body_theta, T_body_phi.* The body forces in turn produce by the longitudinal/lateral/vertical dynamics the translatory variables of motion x, y, z and their higher time-derivatives x', x" etc. Likewise, the body torques produce by the yaw/pitch/roll dynamics the rotational variables of motion ψ, θ, ϕ and their higher time-derivatives ψ', ψ" etc.

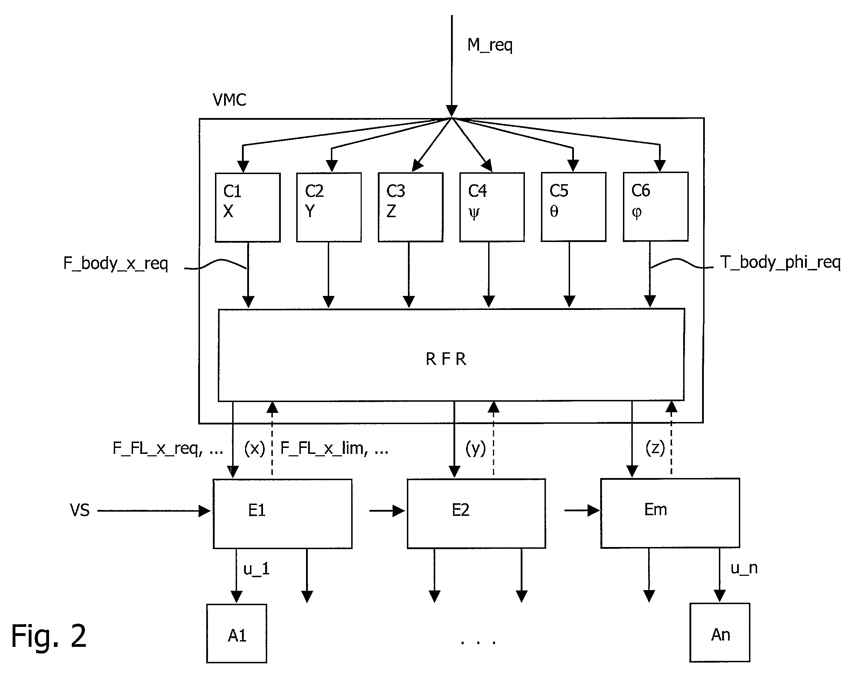

A main aspect of the approach according to the present invention is to consider the "Vehicle Motion Controller" VMC as an inversion of the blocks "Tire Force Coupling" TFC and "Vehicle Body Force Coupling" VBFC of figure 1. The resulting solution is depicted in figure 2.

The "Vehicle Motion Controller" VMC receives as input the vehicle motion request *M_req* which may be any suited expression of the desired future movement of the vehicle and typically contains information about the position of the pedals operated by the driver. In a first level the VMC is structured into six independent dynamical controller elements *C1*, ..., *C6* each dedicated to exactly one direction of vehicle body motion, i.e. the variables x, y, z, *ψ,* θ, and ϕ. The controller elements *C1* to *C6* receive the motion request *M_req* as input and calculate three desired values of body forces, *F_body_x_req, F_body_y_req,* and *F_body_z_req,* and three desired values of body torques, T_*body_psi_req, T_body_theta_req,* and *T_body_phi_req,* respectively. These six desired values correspond to the six degrees of freedom of the vehicle and are determined such that their application to the vehicle would make the vehicle meet the motion request *M_req.* Apart from that the design of the individual controllers shall not be restricted in any way.

In the next level the VMC contains a module called "Reversed Force Relation" RFR. The RFR is a distribution element which exactly or approximately inverts the known "Vehicle Body Force Coupling" (module VBFC in figure 1) between tire forces (*F*_*FL*_*x* etc.) on the one hand and body forces/torques *(F_body_x,* ..., *T_body_phi)* on the other hand. Input to the RFR module is the vehicle state VS and the vector of six desired values of vehicle body forces/torques *F_body_x_req,..., T_body_phi_req* that was calculated in the first level of the VMC. Output of the RFR module is a vector of twelve requested tire forces *F_FL_x_req, ..., F_RR_z_req,* the application of which would result in the desired values for the body forces/torques of the input to the RFR.

Alternatively to the embodiment described above and shown in figure 2, the "Reversed Force Relation" might output a vector of requested (semi-)active forces *f1_req, ..., fn_req* to be generated by the actuators (chassis control systems) under consideration, effectively inverting in one step the combined "Tire Force Coupling" TFC and "Vehicle Body Force Coupling" VBFC relationships of figure 1.

Moreover, the calculation of the "Reversed Force Relation" RFR may already take into account any limitations given by the set of actuators under consideration. Such limit information may be compiled off-line into the "Reversed Force Relation" RFR or may be considered on-line, e.g. by limit values *F_FL_x_lim,* ..., *F_RR_z_lim* as shown in figure 2.

The output of the "Reversed Force Relation" RFR module may be post-processed by further coordination instances *E1, ..., Em* which perform a conversion and effectiveness calculation (coordination) taking the vehicle state *VS* into account.

Finally, commands *u_1, ..., u_n* are generated and passed to each actuator *A1, ..., An.* The actuators may comprise "smart" actuators, too, which themselves contain some more or less elaborated means for the controlled execution of their tasks (e.g. DE 198 38 336 A1 considers components of steering, chassis, driving or brakes in order to sub-structure VMC output requests).

The proposed explicit consideration of a decoupling "Reversed Force Relation" RFR clearly has the advantage to yield independent control problems for the six degrees of freedom of body motion, simplifying controller design and structuring specification of targets to be met by active control system intervention. Moreover, the given operating range within physical actuator limitations is assigned to the task of vehicle motion control in an optimal manner.

The "Reversed Force Relation" RFR may be implemented in either fixed or variable form.

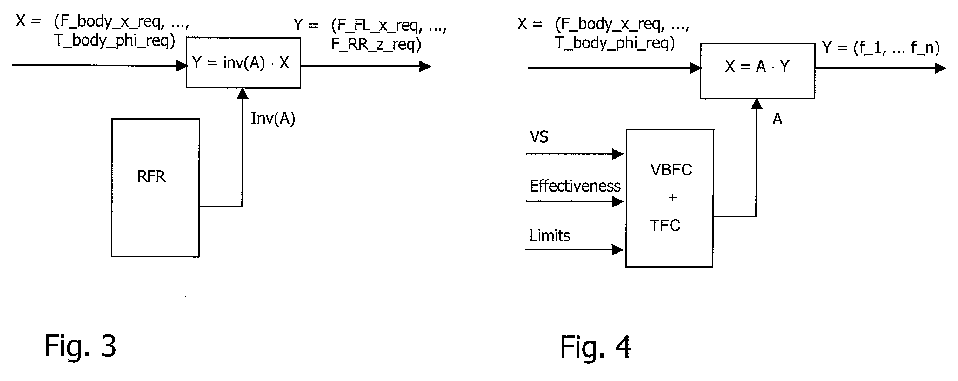

In the fixed form the RFR is a reversion of the "Vehicle Body Force Coupling" VBFC of figure 1 only. As figure 3 shows, the reversion *inv(A)* of "Vehicle Body Force Coupling" may be calculated off-line and readily implemented in the form of a once fixed input-output characteristics.

Reversion of the combined "Vehicle Body Force Coupling" VBFC and "Tire Force Coupling" TFC on the other hand is shown in figure 4 and dependent on the vehicle state *VS* with respect to the currently acting tire forces. As in this case variable signals need to be taken into account, reversion has to be done on-line. Also any on-line consideration of actuator limitation or actuator effectiveness asks for on-line changing reversion of force relations.

The state-dependent implementation may be realised by on-line calculation of
- Matrix-inverse, Matrix-Pseudo-inverse;
- suitable Matrix-decomposition (QR, Singular Value-Decomposition);
- any numerical optimisation algorithm (e.g. Simplex, Least-Squares, etc.).

Alternatively, realisation could apply a state-dependent interpolation between a fixed number of off-line calculated I/O-characteristics and/or an off-line calculated analytical solution of state-dependent force relation.

## Claims

1. Method for motion control of a vehicle according to a given motion request (M_req), comprising the following steps:
a) expressing said motion request (M_req) by desired values (F_body_x_req, ..., T_body_phi_req) of body forces and/or torques corresponding to the degrees of freedom of the vehicle;
b) calculating requested activities (f_1, ..., f_n) of given actuators (A1, ... An) that can produce said desired values of body forces and/or torques;
c) sending commands (u_1, ..., u_n) to the actuators in order to produce said requested activities.

2. Method according to claim 1, **characterised in that** said calculation of requested activities consists of the following steps:
b1) calculating requested tire forces (F_FL_x_req, ... , F_RR_z_req) at the contact points of the tires that can produce said desired values (F_body_x_req, ... , T_body_phi_req) of body forces and/or torques;
b2) calculating requested activities (f_1, ..., f_n) of the actuators (A1, ... , An) that can produce said requested forces (F_FL_x_req, ... , F_RR_z_req).

3. Method according to claim 1 or 2, **characterised in that** the desired values (F_body_x_req, ..., T_body_phi_req) of body forces and/or torques correspond to the three Cartesian coordinates (x, y, z) of the vehicle and the three angles of rotation (ψ, θ, ϕ) of the vehicle.

4. Method according to one of claims 1 to 3, **characterised in that** the calculation of requested activities (f_1, ..., f_n) takes limits (F_FL_x_lim, ...) of the actuators (A1, ..., An) into account.

5. Method according to one of claims 1 to 4, **characterised in that** the calculation of requested activities (f_1, ..., f_n) takes the effectiveness of different actuators (A1, ..., An) into account.

6. Controller for vehicle motion, comprising
a) an input for a motion request (M_req);
b) an input for the vehicle state (VS);
c) an output for commands (u_1, ..., u_n) to a given set of actuators (A1, ..., An);
**characterised by**
d) a number of body force calculation units (C1, ... , C6) that are designed to express a given motion request (M_req) by desired values (F_body_x_req, ... , T_body_phi_req) of body forces and/or torques corresponding to the degrees of freedom of the vehicle;
e) a command calculation unit (RFR, E1, ..., En) that is designed to calculate and issue commands (u_1, ..., u_n) to the actuators (A1, ..., An) in order to produce said desired values of body forces and/or torques.

7. Controller according to claim 6, **characterised in that** it is designed to execute a method according to one of claims 1 to 5.

8. Controller according to claim 6 or 7, **characterised in that** the actuators (A1, ..., An) comprise at least one of a brake and/or an active steering system.
